# EUROPEAN PATENT APPLICATION

(11) **EP 2 453 511 A1**
(43) Date of publication of application: **16.05.2012**
(21) Application number: 09847085.9
(22) Date of filing: 09.07.2009
(51) Int. Cl.: H01M 10/05

(54) **POLYMER GEL ELECTROLYTE AND POLYMER SECONDARY BATTERY USING SAME**

(71) Applicant: NEC Energy Devices, Ltd., Chuo-ku Sagamihara-shi Kanagawa 252-5298 (JP); Dai-Ichi Kogyo Seiyaku Co., Ltd., Kyoto 600-8873 (JP)
(72) Inventor: KONO, Yasutaka, Sagamihara-shi Kanagawa 252-5298 (JP); UTSUGI, Koji, Sagamihara-shi Kanagawa 252-5298 (JP); KOBAYASHI, Hiroshi, Sagamihara-shi Kanagawa 252-5298 (JP); ISHIKAWA, Hitoshi, Sagamihara-shi Kanagawa 252-5298 (JP); KIKUTA, Manabu, Kyoto-shi Kyoto 600-8873 (JP); KONO, Michiyuki, Kyoto-shi Kyoto 600-8873 (JP)
(74) Representative: Vossius & Partner
(86) International application number: PCT/JP2009/062531
(87) International publication number: WO 2011/004483

(57) **Abstract**

The present invention provides a polymer gel electrolyte capable of inhibiting the cell expansion of a polymer secondary battery and improving the cycle characteristics and high-temperature storage characteristics of a polymer secondary battery. The present invention relates to a polymer gel electrolyte comprising an aprotic solvent; a supporting salt; a cyclic sulfonic acid ester which includes at least two sulfonyl groups; and a crosslinked polymer obtained by crosslinking a methacrylic acid ester polymer represented by general formula (1) below. In the general formula (1), n meets 1800<n<3000 and m meets 350<m<600.

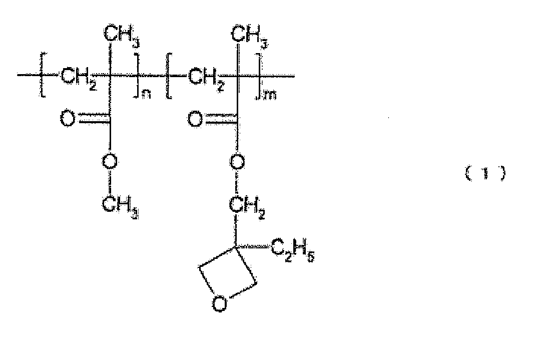

## Description

### -[TECHNICAL FIELD]

The present invention relates to a polymer gel electrolyte and polymer secondary battery using the same.

### [BACKGROUND ART]

Since a polymer secondary battery such as lithium polymer battery can be slimmed, it has high degree of freedom for selecting its shape, and it has higher safety due to non-use of an electrolytic solution, it is noted as a power source for mobile devices, etc. Recently, as functions of mobile devices increase, the target of technical development of a lithium polymer battery is to obtain high energy and to improve battery characteristics required for a battery with high energy.

Particularly, the significant technical problem is to improve safety further, high-temperature storage characteristics, and cycle characteristics, etc. The cycle characteristics have been improved by devising the used polymer materials. In Patent Literature 1, there is described that cycle characteristics are improved by using a gel electrolyte comprising a physical crosslinking type polymer and a chemical crosslinking type polymer. On the other hand, in Patent Literature 2, there is described that a permeability of a pre-gel solution is improved by modifying the surface of the used separator. In Patent Literature 3, there is described that a lithium polymer battery with excellent battery performance and high safety is obtained by gelating an electrolytic solution using a crosslinking material and using a non-conductive porous material and an electrically insulating particle as a separator. Also, in Non-Patent Literature 1, the study such as the electrode material and cell shape is made in a polymer secondary battery using a gel electrolyte, and for example, although artificial graphite (agglomerate graphite) is high price as an anode material, it is used to inhibit cell expansion or improve cycle characteristics.

As described above, a selection of a gel electrolyte material as well as a selection of an electrode material, a cell shape, cell production conditions, and an electrolytic solution material, etc. is very important in a polymer secondary battery using a gel electrolyte.

### [CITATION LIST]

### [PATENT LITERATURE]

Patent Literature 1: JP2002-100406 A1
Patent Literature 2: JP2003-257490 A1
Patent Literature 3: JP2009-70605 A1
Patent Literature 4: WO85/03075

### [NON-PATENT LITERATURE]

Non-Patent Literature 1: Kanemura Kiyoshi, "Latest Technology of Polymer Battery II," pp. 242-247, (CMC Publishing Co., Ltd.; 2003)

### [SUMMARY OF INVENTION]

### [TECHNICAL PROBLEM]

However, since a gel electrolyte has lower ion conductivity than an electrolytic solution, a polymer secondary battery using a gel electrolyte generally has inferior cycle characteristics to a secondary battery using an electrolytic solution. Also, a polymer secondary battery has internal resistance in a high-temperature storage or cycle at high temperature, and thus, does not have enough characteristics required for battery which is applied to electronic vehicles, storage batteries, etc.

The present invention has made so as to solve the above problems. In other words, the problems to be solved by the present invention are to inhibit the cell expansion of a polymer secondary battery and to improve the cycle characteristics and high-temperature storage characteristics of a polymer secondary battery.

### [SOLUTION TO PROBLEM]

In order to solve the above problems, the present invention provides a polymer gel electrolyte comprising an aprotic solvent; a supporting salt; a cyclic sulfonic acid ester including at least two sulfonyl groups; and a crosslinked polymer obtained by crosslinking a methacrylic acid ester polymer represented by general formula (1) below. Also, the present invention provides a polymer secondary battery comprising a cathode, an anode, and the polymer gel electrolyte.

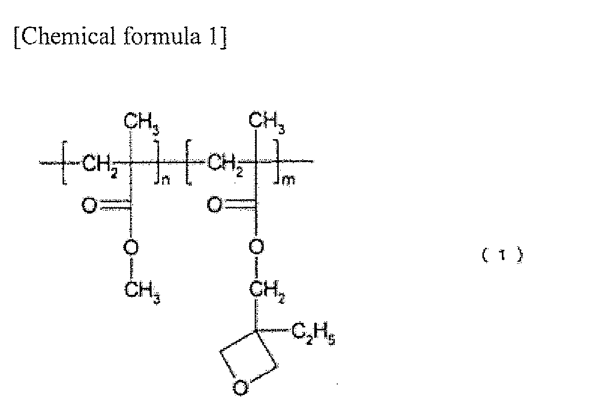

In the general formula (1), n meets 1800<n<3000 and m meets 350<m<600.

### [ADVANTAGEOUS EFFECTS OF INVENTION]

According to the present invention, the cell expansion of a polymer secondary battery can be inhibited and the cycle characteristics and high-temperature storage characteristics of a polymer secondary battery can be improved.

### [BRIEF DESCRIPTION OF DRAWINGS]

Fig. 1 explains the constitution of a cathode in the polymer secondary battery of the present invention.
Fig. 2 explains the constitution of an anode in the polymer secondary batter of the present invention.
Fig. 3 explains the constitution of battery element after winding the polymer secondary battery of the present invention.
Fig. 4 explains the constitution of the lithium polymer secondary battery of the present invention.

### [DESCRIPTION OF EMBODIMENTS]

### <Polymer gel electrolyte>

The polymer gel electrolyte of the present invention comprises an aprotic solvent; a supporting salt; a cyclic sulfonic acid ester including at least two sulfonyl groups; and a crosslinked polymer obtained by crosslinking a methacrylic acid ester polymer represented by the general formula (1). In this specification, a mixture of an aprotic solvent and a supporting salt is referred to as an electrolytic solution. The polymer electrolyte is used for a polymer secondary battery, and, particularly, preferably is used for a lithium polymer secondary battery.

The specific examples of an aprotic solvent include cyclic carbonates such as propylene carbonate (PC), ethylene carbonate (EC), butylene carbonate (BC), and vinylene carbonate (VC); chain carbonates such as dimethyl carbonate (DMC), diethyl carbonate (DEC), ethyl methyl carbonate (EMC), and dipropyl carbonate (DPC); aliphatic carbonic acid esters such as methyl formate, methyl acetate, and ethyl propionate; γ-lactones such as γ-butyrolactone; chain ethers such as 1,2-ethoxy ethane (DEE), and ethoxy methoxy ethane (EME); cyclic ethers such as tetrahydrofuran, and 2-methyl tetrahydrofuran; fluorine derivatives thereof; dimethyl sulfoxide, 1,3-dioxolane, formamide, acetamide, dimethyl formamide, dioxolane, acetonitrile, propylnitrile, nitromethane, ethyl monoglyme, phosphoric acid tri-ester, trimethoxymethane, dioxolane derivative, sulfolane, methylsulfolane, 1,3-dimethyl-2-imidazolidinone, 3-methyl-2-oxazolidinone, propylene carbonate derivative, tetrahydrofuran derivative, ethyl ether, 1,3-propane sultone, anisole, N-methyl pyrrolidone, fluorinated carbonic acid ester. Aprotic organic solvent may be one, or two or more.

A supporting salt can be accordingly selected from a material capable of increasing conductivity of an aprotic solvent, considering the type of a polymer secondary battery. For example, when it is used for a lithium polymer secondary battery, the specific examples of the supporting salt include LiPF₆. LiAsF₆, LiAlCl₄, LiClO₄, LiBF₄, LiSbF₆, LiCF₃SO₃, LiC₄F₉SO₃, LiC(CF₃SO₂)₃, LiN(CF₃SO₂)₂, LiN(C₂F₅SO₂)₂, carbonic acid lithium, chloro borane lithium, 4-phenyl-boric acid lithium, LiBr, LiI, LiSCN, LiCI, LiF. Among them, LiPF₆, LiBF₄, LiAsF₆ and LiSbF₆ are preferable. Supporting salt may be one or two or more.

In an electrolytic solution, the concentration of a supporting salt is preferably 5 to 25% by mass. If the concentration of a supporting salt is 5% by mass or more, the desired ion conductivity can be attained. If the concentration of a supporting salt is 25% by mass or less, it is possible to inhibit the reduction of ion conductivity caused by an increase in the viscosity of an electrolytic solution.

A cyclic sulfonic acid ester including at least two sulfonyl groups (hereinafter, simply referred to as "cyclic sulfonic acid ester") contributes to the formation of passivity film on an electrode interface of a polymer secondary battery, and thus, can inhibit the decomposition of solvent molecules. Also, if a cathode active material is an oxide containing manganese, a cyclic sulfonic acid ester can inhibit the elution of manganese and can prevent eluted manganese from attaching to an anode. Therefore, a polymer gel electrolyte comprising a cyclic sulfonic acid ester is used for a polymer secondary battery, to form a film on an anode and to reduce influence caused by the elution of manganese, etc. thereby improving the cycle characteristics of a secondary battery, and inhibiting the expansion of cells due to the gas generation and the increase in internal resistance further.

The specific example of the cyclic sulfonic acid ester includes a compound represented by the general formula (2).

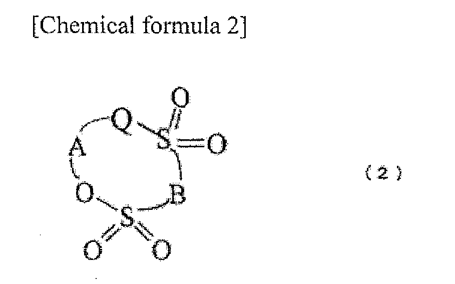

In the general formula (2), Q is an oxygen atom, a methylene group, or a single bond; A is a substituted or unsubstituted alkylene group including 1 to 5 carbon atoms, a carbonyl group, and a sulfinyl group, a substituted or unsubstituted fluoroalkylene group including 1 to 6 carbon atoms, or a divalent group including 2 to 6 carbon atoms which an alkylene unit or a fluoroalkylene unit is bonded via a ether bond; and B is a substituted or unsubstituted alkylene group, a substituted or unsubstituted fluoroalkylene group, or an oxygen atom. In the general formula (2), if Q is a single bond, the carbon molecules comprised in A and S form a C-S single bond.

Also, in the general formula (2), the number of carbon atoms in A represents the number of carbon atoms making the cycle and does not include the number of carbon atoms in the side chain. If A is a substituted or unsubstituted fluoroalkylene group including 1 to 6 carbon atoms, A may include a methylene unit and a fluoromethylene unit, or only a fluoromethylene unit. Also, if an alkylene unit or a fluoroalkylene unit is bonded via ether bond, the alkylene units may be bonded with each other, or the fluoroalkylene units may be bonded with each other, or the alkylene unit may be bonded to fluoroalkylene unit.

The compound represented by the general formula (2) can be produced by the method described in the Patent Literature 4.

The specific example of the compound represented by the general formula (2) include cyclic disulfonic acid ester represented by the general formulae (3) to (8).

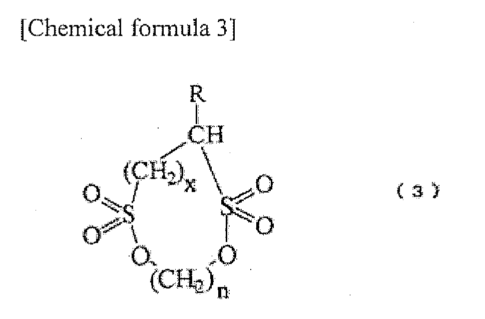

In the general formula (3), x is 0 or 1, n is an integer between 1 and 5, and R is a hydrogen atom, a methyl group, an ethyl group, or a halogen atom.

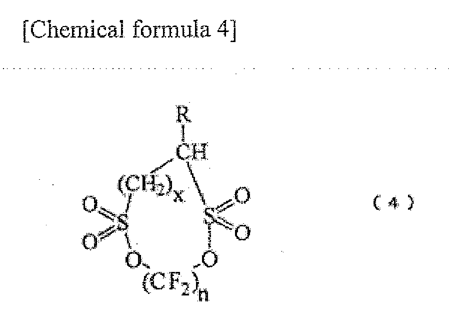

In the general formula (4), x is 0 or 1, n is an integer between 1 and 5, and R is a hydrogen atom, a methyl group, an ethyl group, or a halogen atom.

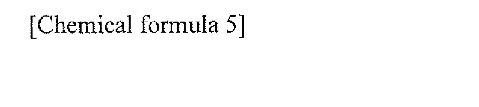

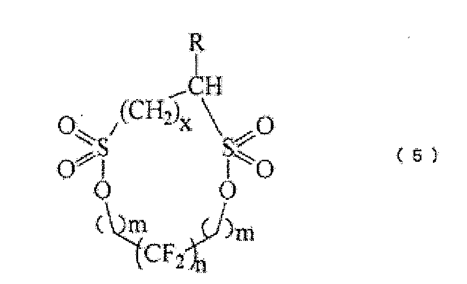

In the general formula (5), x is 0 or 1, m is independently 1 or 2, n is an integer between 1 and 4, and R is a hydrogen atom, a methyl group, an ethyl group, or a halogen atom.

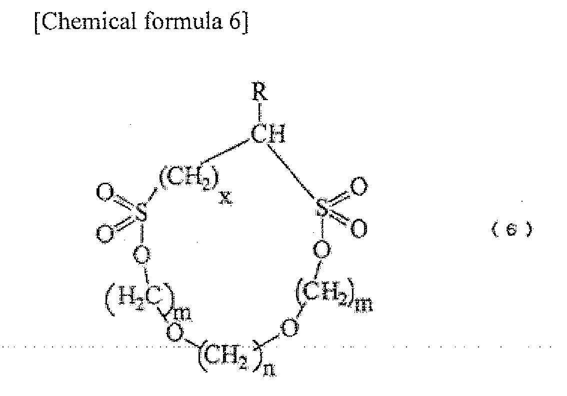

In the general formula (6), x is 0 or 1, m is independently 1 or 2, n is an integer between 1 and 4, and R is a hydrogen atom, a methyl group, an ethyl group, or a halogen atom.

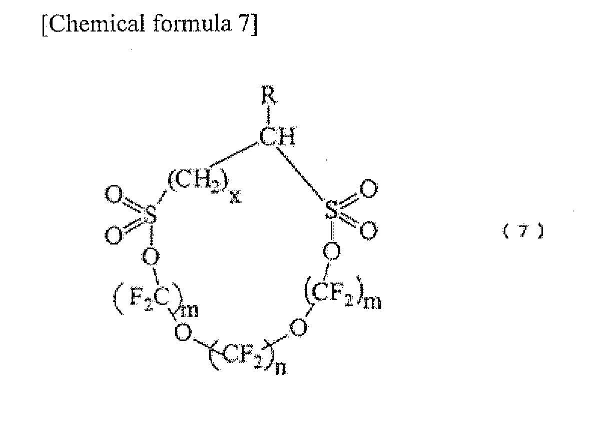

In the general formula (7), x is 0 or 1, m is independently 1 or 2, n is an integer between 1 and 4, and R is a hydrogen atom, a methyl group, an ethyl group, or a halogen atom.

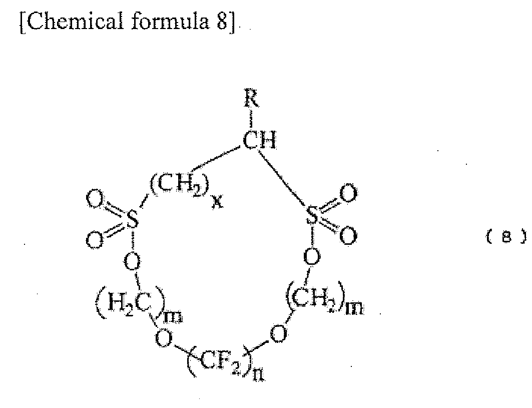

In the general formula (8), x is 0 or 1, m is independently 1 or 2, n is an integer between 1 and 4, and R is a hydrogen atom, a methyl group, an ethyl group, or a halogen atom.

The specific examples of the compound represented by the general formula (2) are shown in Table 1, but the compound represented by the general formula (2) is not limited to these examples.

**[Table 1]**

| compound No. | chemical structure | compound No. | chemical structure | compound No. | chemical structure |
|---|---|---|---|---|---|
| 1 | 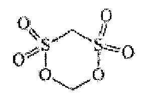 | 8 | 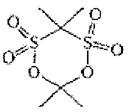 | 15 | 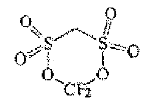 |
| 2 | 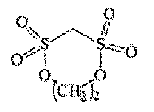 | 9 | 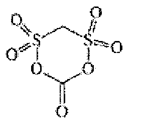 | 16 | 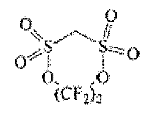 |
| 3 | 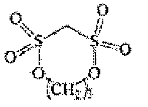 | 10 | 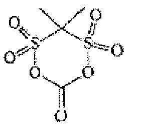 | 17 | 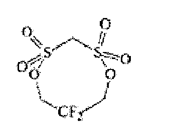 |
| 4 | 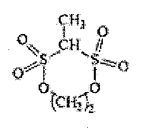 | 11 | 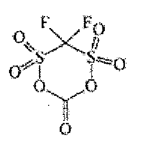 | 18 | 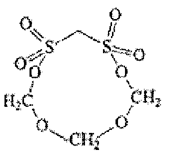 |
| 5 | 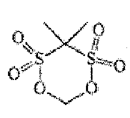 | 12 | 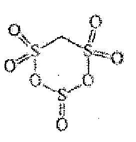 | 19 | 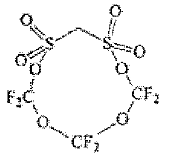 |
| 6 | 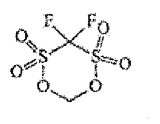 | 13 | 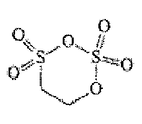 | 20 | 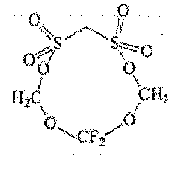 |
| 7 | 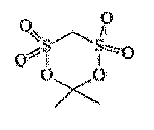 | 14 | 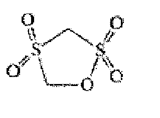 | | |

The cyclic sulfonic acid ester may be one, or two or more.

A mixed amount of a cyclic sulfonic acid ester is preferably 0.005 to 10% by mass, and more preferably 0.01 to 5% by mass, with respect to 100 % by mass of an electrolytic solution. If a mixed amount of a cyclic sulfonic acid ester is 0.005% by mass or more, sufficient film effect can be achieved. If a mixed amount of a cyclic sulfonic acid ester is 0.01% by mass or more, the battery characteristics can be further improved. If a mixed amount of a cyclic sulfonic acid ester is 10 % by mass or less, the transfer resistance of lithium ion is not increased and there is little adverse effect to the polymer. If a mixed amount of a cyclic sulfonic acid ester is 5 % by mass or less, the battery characteristics can be further improved.

The methacrylic acid ester polymer represented by the general formula (1) is obtained by the radical copolymerization of methyl methacrylate and (3-ethyl-3-oxetanyl) methyl methacrylate. The number of methyl methacrylate unit is represented as n, and n meets 1800<n<3000. The number of (3-ethyl-3-oxetanyl) methyl methacrylate unit is represented as m, and m meets 350<m<600. The methacrylic acid ester polymer represented by the general formula (1) may be a block copolymer or a random copolymer. Also, n and m represent an average value and may not be an integer.

The crosslinked polymer (hereinafter, simply referred to as "crosslinked polymer") obtained by crosslinking methacrylic acid ester polymer represented by the general formula (1) is obtained by the ring-opening polymerization an oxetanyl group contained in the methacrylic acid ester polymer represented by the general formula (1) using a cation polymerization initiator. The known polymerization initiators may be generally used as the cation polymerization initiator. However, it is preferable to use a small amount of an acid material obtained by hydrolyzing a lithium salt and an anion component of the lithium salt included in an electrolytic solution, because it has little characteristics added to a battery. Herein, an amount of a lithium salt contained in an electrolytic solution is the same as the preferable concentration of a supporting salt in an electrolytic solution.

A mixed amount of the crosslinked polymer is preferably 0.5 to 10% by mass, more preferably 1 to 5% by mass, and most preferably 1.5 to 2.5% by mass, with respect to 100 % by mass of an electrolytic solution. If a mixed amount of the crosslinked polymer is 0.5% by mass or more, it is possible to attain the gelation which an electrolytic solution is capable of being successfully retained. If a mixed amount of the crosslinked polymer is 10% by mass or less, it is possible to prevent a gel from becoming brittle because of an over gelation and battery characteristics from reducing.

The polymer electrolyte of the present invention is easily and stably produced by for example, a method which comprises dissolving a supporting salt in an aprotic solvent; dissolving a cyclic sulfonic acid ester in the aprotic solvent; mixing a methacrylic acid ester polymer represented by a general formula (1) with the aprotic solvent; and crosslinking the methacrylic acid ester polymer represented by the general formula (1).

A polymer electrolyte of the present invention is used for a polymer secondary battery, to inhibit the cell expansion and improve cycle characteristics and high-temperature storage characteristics

### <Polymer secondary battery>

The polymer secondary battery of the present invention is configured so as to comprise a cathode, an anode, and said polymer gel electrolyte.

As a cathode, a cathode which a cathode active material layer is formed on a current collector made of metal such as aluminum foil may be used. A cathode slurry is applied onto the current collector, dried, compressed and shaped to form the cathode active material layer. The cathode slurry may be obtained by dispersing and kneading a cathode active material in a solvent such as N-methyl-2-pyrrolidone (NMP) together with a conductive aid such as carbon black and a binder such as polyvinylidine difluoride (PVDF).

A lithium containing composite oxide such as LiCoO₂, LiNiO₂, LiMn₂O₄ may be used as a cathode active material. Also, the transition metal parts in these lithium containing composite oxides may be replaced with other element. Also, it is possible to use a lithium containing composite oxide including a plateau at 4.5 V or more as potential with regard to metal lithium electrode. The specific examples of such lithium containing composite oxide include a spinel type lithium manganese composite oxide, an olivine type lithium containing composite oxide, and an inverse spinel type lithium containing composite oxide, etc. Specifically, the lithium containing composite oxide corresponds to a compound represented by the general formula (9).

Liₐ(MₓMn₂₋ₓ)O₄ (9)

In the general formula (9), x meets 0<x<2, a meets 0<a<1.2, and M is at least one selected from the group consisting of Ni, Co, Fe, Cr and Cu.

As an anode, an anode which an anode active material layer is formed on a current collector made of metal such as copper foil may be used.

It is possible to use a lithium metal or a lithium alloy as well as one, or two or more materials selected from materials capable of absorbing and releasing lithium, as the anode active material. The specific examples of material capable of absorbing and releasing lithium include carbon material and oxide, etc.

A lithium alloy is composed of lithium and metal capable of forming an alloy together with lithium. Specifically, the examples of the lithium alloy include a binary alloy or at least a ternary alloy of lithium and metal such as Al, Si, Pb, Sn, In, Bi, Ag, Ba, Ca, Hg, Pd, Pt, Te, Zn, and La.

A lithium metal or a lithium alloy is preferably in an amorphous state, because it is hard to generate the deterioration resulting from non-uniformity such as a crystal grain boundary and crystal fault in an amorphous structure. An anode active material layer made of a lithium metal or a lithium alloy can be formed by a method such as a melt cooling method, a liquid rapid cooling method, an atomization method, a vacuum vapor deposition method, a sputtering method, a plasma CVD method, a photo CVD method, a thermal CVD and a sol-gel method.

Graphite, amorphous carbon, diamond like carbon, a carbon nanotube, or a composite oxide thereof may be used as a carbon material, Among them, graphite or amorphous carbon is preferable. Particularly, graphite has high electronic conductivity and excellent adhesion to a current collector made of metal such as copper and voltage plateau. Since graphite is formed at a high process temperature, it contains less impurity and is benefit in improving the performance of an anode. An anode active material layer comprising a carbon material as an anode active material may be formed by applying an anode slurry comprising a carbon material onto a current collector, drying, compressing and molding it. The anode slurry may be obtained by dispersing and kneading a carbon material as the anode active material in a solvent such as N-methyl-2-pyrrolidone (NMP) together with a binder such as polyvinylidine difluoride (PVDF).

Also, a silicon oxide, a tin oxide, an indium oxide, a zinc oxide, a lithium oxide, or a composite thereof can be used as an oxide. Among them, a silicon oxide is preferable, because it is safety and does not react with other compounds. Also, an oxide is preferably in an amorphous state, because the deterioration resulting from non-uniformity such as a crystal grain boundary and crystal fault does not occur. An anode active material layer made of an oxide can be formed by a method such as a vapor deposition method, a CVD method, or a sputtering method.

A polymer secondary battery can be produced as below. First, a cathode and an anode are stacked to form a stacked body by interposing a separator between the cathode and anode. Alternatively, a cathode and an anode are wound so as to be flat by interposing a separator between the cathode and anode, and then, are shaped to form a winding body. Subsequently, after the laminated body or winding body is inserted into an outer covering body such as a can or a laminate, a polymer gel electrolyte (pre-gel solution) is injected into the outer covering body to cure (gelate) it, thereby obtaining a polymer secondary battery. After a pre-gel solution and an electrode is inserted into the outer covering body, the pre-gel solution may be cured. Alternatively, a battery may be assembled after applying a gel electrolyte onto an electrode or a separator.

A separator such as a nonwoven fabric and a polyolefin fine porous film used for a lithium polymer battery generally may be used as a separator. A separator is not an essential element and a polymer gel electrolyte may have a function as a separator.

In the polymer secondary battery of the present invention, the cell expansion is inhibited, and cycle characteristics and high-temperature storage characteristics are improved. In other words, the present invention is adopted to a polymer secondary battery comprising a laminate film outer covering body, resulting in inhibiting the resistance increase and battery expansion (gas generation). For example, it has remarkable effects in a lithium polymer secondary battery from information portable devices to a large-sized battery for automobiles.

### [EXAMPLES]

### (Example 1)

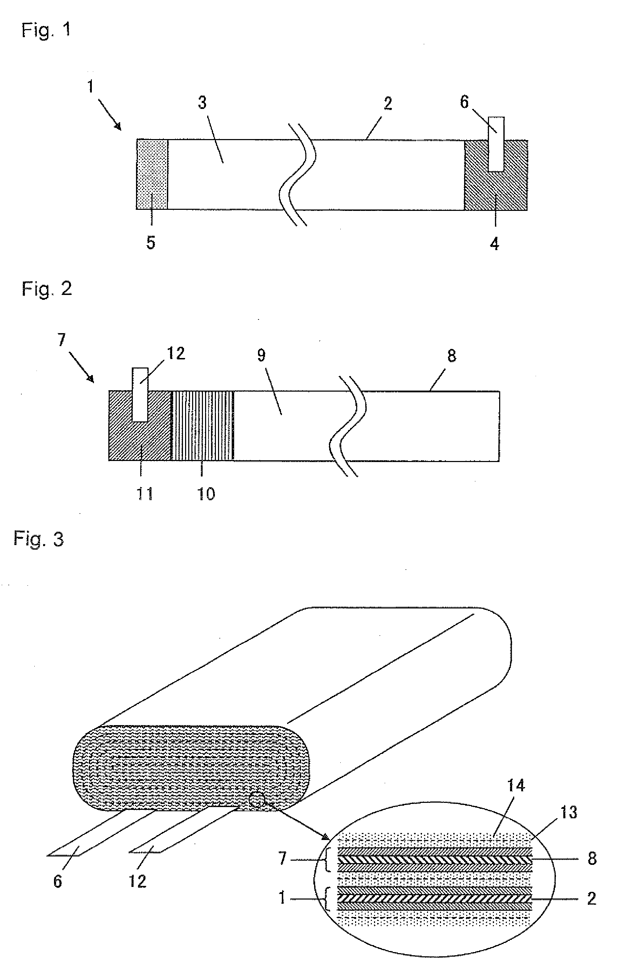

Firstly, a process for producing a cathode 1 will be explained with reference to Fig. 1. N-methyl-2-pyrrolidone was added to and further mixed with a mixture of 85% by mass of LiMn₂O₄ as a cathode active material, 7% by mass of acetylene black as a conductive aid and 8% by mass of PVDF as a binder, to prepare a cathode slurry. The cathode slurry was applied onto both surfaces of an Al foil 2 having a thickness of 20 µm to be a current collector so that the cathode slurry had a thickness of 160 µm after roll press processing, by doctor blade method, thereby forming a cathode active material coated portion 3. On one end, there is provided a cathode active material non-coated portion 4 which a cathode active material is not coated on both surfaces of the portion 4. On the other end, there is provided a cathode active material one surface coated portion 5 which a cathode active material is coated on only one surface of the portion 5. A cathode conductive tab 6 was attached to the cathode active material non-coated portion 4, to form a cathode 1.

Next, a process for producing an anode 7 will be explained with reference to Fig. 2. N-methyl-pyrrolidone was added to and further mixed with a mixture of 90% by mass of flake graphite as an anode active material and 10% by mass of PVDF as a binder, to prepare an anode slurry. The anode slurry was applied onto both surfaces of a Cu foil 8 having a thickness of 10 µm to be a current collector so that the anode slurry had a thickness of 120 µm after roll press processing, thereby forming an anode active material coated portion 9. On one end, there is provided an anode active material non-coated portion 1 of which an anode active material is not applied onto both surfaces of the portion 11, and an anode active material one surface coated portion 10 which an anode active material is applied onto only one surface of portion 10. An anode conductive tab 12 was attached to the anode active material non-coated portion 11, to form an anode 7.

A process for producing a battery element will be explained with reference to Fig. 3. Two separators 13 made of a polyethylene fine porous film and having a thickness of 12 µm and a porosity of 35% were welded and their cut portions were fixed to a winding core of a winding device and wound, and then the front ends of the cathode 1 and anode 7 were introduced into them. The front end of the cathode 1 was an end to which a cathode conductive tab 6 was not attached, and the front end of the anode 7 was an end to which an anode conductive tab 8 was not attached. The winding core was rotated and the anode 7, cathode 1, and separators were wound to form a battery element (hereinafter, referred as "jelly - roll (J/R)") while the anode was disposed between the two separators and the cathode electrode was disposed on the top surface of the separators. In this process, the gel electrolyte 14 in Fig. 3 was not present.

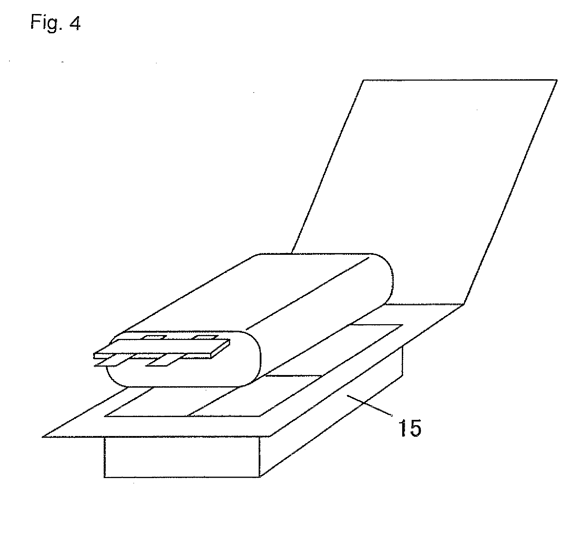

As shown in Fig. 4, the J/R was integrated into an embossed laminate outer covering body 15, the sides of the laminate outer covering body 15 were folded, and the portion of the laminate outer covering body 15 except for a pre-gel solution injecting portion was heat-welded.

12% by mass of LiPF₆ as a supporting salt was added to an aprotic solvent comprising 30% by mass of ethylene carbonate (EC) and 58% by mass of diethyl carbonate (DEC), thereby obtaining an electrolytic solution. The electrolytic solution was mixed with 2% by mass of a methacrylic acid ester polymer represented by the general formula (1) (n=2620, m=420) and 1% by mass of a compound represented by Compound No.1, to prepare the pre-gel solution to be the polymer gel electrolyte 14. The pre-gel solution was injected through the pre-gel solution injecting portion, was subjected to a vacuum impregnation, and was gelated at 60°C for 20 hours, thereby obtaining a lithium polymer battery.

The obtained lithium polymer battery was charged up to a voltage of 4.2V (charge condition: current of 0.2 C, time of 6.5 h, and temperature of 20°C), and then was discharged down to a voltage of 3.0V at current of 0.2 C. Discharge capacity at this time is defined as an initial capacity.

Subsequently, 500 cycles of charges and discharges were performed to the lithium polymer battery. The charge conditions were an upper limit voltage of 4.2 V, a current of 1 C, and time of 2.5 h, and the discharge conditions were a lower limit voltage of 3.0 V and a current of 1 C. Both charges and discharges were performed at 40°C. The ratio of the discharge capacity (1 C) of the 500^{th} cycle to the discharge capacity (1 C) of the first cycle is defined as the capacity retention rate after 500 cycles. Also, the ratio of the cell volume after charge of the 500^{th} cycle to the cell volume after charge of the first cycle is defined as the cell volume change rate after 500 cycles. The results are shown in Table 2.

### (Examples 2 to 4)

lithium polymer batteries were produced by the same processes as Example 1, except that a compound represented by Compound No. 1 was changed to the compound shown in Table 2. The characteristics of the obtained lithium polymer batteries are shown in Table 2.

### (Comparative Example 1)

A lithium polymer battery was produced by the same process as Example 1, except that a compound represented by Compound No. 1 was not used. The characteristics of the obtained lithium polymer battery are shown in Table 2.

### (Comparative Example 2)

A lithium polymer battery was produced by the same process as Example 1, except that a compound represented by Compound No. 1 was changed to VC. The characteristics of the obtained lithium polymer battery are shown in Table 2.

**[Table 2]**

| | Cyclic sulfonic acid ester | Capacity retention rate after 500 cycles (%) | Cell volume change rate after 500 cycles (%) |
|---|---|---|---|
| Example 1 | No. 1 | 87 | 3.0 |
| Example 2 | No. 4 | 82 | 3.2 |
| Example 3 | No. 9 | 80 | 3.4 |
| Example 4 | No. 12 | 75 | 4.3 |
| Comparative Example 1 | None | 5 | 30 |
| Comparative Example 2 | (VC) | 76 | 7.3 |

As shown in Table 2, the lithium polymer batteries produced by Examples 1 to 4 have a significantly improved capacity retention rate after 500 cycles and significant inhibition of a volume change after 500 cycles, in comparison to a lithium polymer battery produced by Comparative Example 1 not using a cyclic sulfonic acid ester and a lithium polymer battery produced by Comparative Example 2 using a VC instead of a cyclic sulfonic acid ester.

### (Example 5)

A lithium polymer battery was produced by the same process as Example 1, except that an amorphous carbon was used as an anode active material and an electrolytic solution was prepared by adding 12% by mass of LiPF₆ as a supporting salt to an aprotic solvent comprising 20% by mass of propylene carbonate (PC), 21% by mass of ethylene carbonate (EC) and 47% by mass of diethyl carbonate (DEC) as an electrolytic solution for preparing a pre-gel solution. The characteristics of the obtained lithium polymer battery are shown in Table 3.

### (Examples 6 to 8)

lithium polymer batteries were produced by the same processes as Example 5, except that a compound represented by Compound No. 1 was changed to the compound shown in Table 3. The characteristics of the obtained lithium polymer batteries are shown in Table 3.

### (Comparative Example 3)

A lithium polymer battery was produced by the same process as Example 5, except that a compound represented by Compound No. 1 was not used. The characteristics of the obtained lithium polymer battery are shown in Table 3.

### (Comparative Example 4)

A lithium polymer battery was produced by the same process as Example 5, except that a compound represented by Compound No. 1 was changed to VC. The characteristics of the obtained lithium polymer battery are shown in Table 3.

**[Table 3]**

| | Cyclic sulfonic acid ester | Capacity retention rate after 500 cycles (%) | Cell volume change rate after 500 cycles (%) |
|---|---|---|---|
| Example 5 | Compound No. 1 | 88 | 3.0 |
| Example 6 | Compound No. 4 | 83 | 3.2 |
| Example 7 | Compound No. 9 | 82 | 3.4 |
| Examples 8 | Compound No. 12 | 79 | 3.8 |
| Comparative Example 3 | None | 5 | 30 |
| Comparative Example 4 | (VC) | 75 | 7.4 |

As shown in Table 3, the lithium polymer batteries produced by Examples 5 to 8 have a significantly improved capacity retention rate after 500 cycles and significant inhibition of a volume change after 500 cycles, in comparison to a lithium polymer battery produced by Comparative Example 3 not using a cyclic sulfonic acid ester and a lithium polymer battery produced by Comparative Example 4 using a VC instead of a cyclic sulfonic acid ester.

### (Example 9)

A lithium polymer battery was produced by the same process as Example 1, and the direct current resistance of a lithium polymer battery was measured when it was preserved to be fully charged.

First, the produced lithium polymer battery was respectively charged (upper limit voltage of 4.2 V) and discharged (lower limit voltage of 3.0V) once at 20°C. The charge current and discharge current at this time were constant (1C). The discharge capacity at this time is defined as an initial capacity, and the resistance at this time is defined as an initial resistance. Thereafter, the lithium polymer battery was charged for 2.5 hours at a constant current (1C) up to a predetermined voltage (4.2V), and preserved for 90 days under condition at 20°C, 45°C and 60°C, respectively. After preservation, at a room temperature, the lithium polymer battery was discharged at a constant current (1C) (lower limit voltage of 3.0 V), and was subsequently charged (upper limit voltage of 4.2V) and discharged (lower limit voltage of 3.0V) at a constant current (1C) once more to measure the resistance of the lithium polymer battery at the time of performing the second charge. Table 5 shows the results represented by the relative resistance values after 90 days preservation when the initial resistance is 1 .

### (Examples 10 to 12)

lithium polymer batteries were produced by the same processes as Example 9 and the same evaluations as Example 9 were performed, except that a compound represented by Compound No. 1 was changed to the compound shown in Table 4. The obtained results are shown in Table 4.

### (Comparative Example 5)

A lithium polymer battery was produced by the same process as Example 9 and the same evaluation as Example 9 was performed, except that a compound represented by Compound No. 1 was not used. The obtained results are shown in Table 4.

### (Comparative Example 6)

A lithium polymer battery was produced by the same process as Example 9 and the same evaluation as Example 9 was performed, except that a compound represented by Compound No. 1 was changed to VC. The obtained results are shown in Table 4.

**[Table 4]**

| | Cyclic sulfonic acid ester | Resistance increase rate (%) after 90 days | | |
|---|---|---|---|---|
| | | Preservation at 20°C | Preservation at 45°C | Preservation at 60°C |
| Example 9 | Compound No. 1 | 1 | 1 | 1.01 |
| Example 10 | Compound No. 4 | 1.02 | 1.04 | 1.1 |
| Example 11 | Compound No. 9 | 1.04 | 1.1 | 1.2 |
| Example 12 | Compound No. 12 | 1.05 | 1.12 | 1.26 |
| Comparative Example 5 | None | 5 | 10 | 20 |
| Comparative Example 6 | (VC) | 1.15 | 1.3 | 1.54 |

As shown in Table 4, it is found the resistance increase rate at each temperature of the lithium polymer batteries produced by Examples 9 to 12 is significantly inhibited, in comparison to lithium polymer batteries produced by Comparative Example 5 not using a cyclic sulfonic acid ester and Comparative Example 6 using a VC instead of a cyclic sulfonic acid ester. Particularly, the resistance increase of the lithium polymer battery at preservation at 60 °C was remarkably inhibited.

### DESCRIPTION OF THE DRAWING REFERENCE NUMERALS

- 1: cathode
- 2: Al foil
- 3: cathode active material coated portion
- 4: cathode active material non-coated portion
- 5: cathode active material one surface coated portion
- 6: cathode conductive tab
- 7: anode
- 8: Cu foil
- 9: anode active material coated portion
- 10: anode active material one surface coated portion
- 11: anode active material non-coated portion
- 12: anode conductive tab
- 13: separator
- 14: polymer gel electrolyte
- 15: laminate outer covering body

## Claims

1. A polymer gel electrolyte comprising:
an aprotic solvent;
a supporting salt;
a cyclic sulfonic acid ester including at least two sulfonyl groups; and
a crosslinked polymer obtained by crosslinking a methacrylic acid ester polymer represented by general formula (1) below: 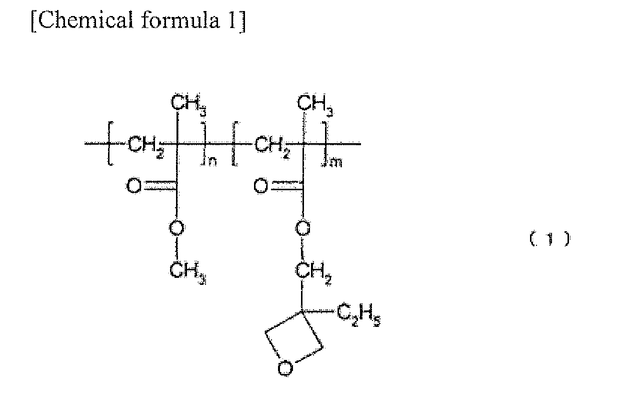 wherein in the general formula (1), n meets 1800<n<3000 and m meets 350<m<600.

2. The polymer gel electrolyte according to claim 1;
wherein the cyclic sulfonic acid ester is a compound represented by general formula (2) below: 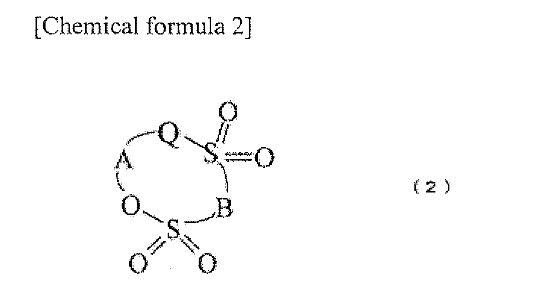 wherein in the general formula (2), Q represents an oxygen atom, a methylene group or a single bond; and A represents a group selected from a substituted or unsubstituted alkylene group including 1 to 5 carbon atoms, a carbonyl group, a sulfinyl group, a substituted or unsubstituted fluoroalkylene group including 1 to 6 carbon atoms, or a divalent group including 2 to 6 carbon atoms which an alkylene unit or a fluoroalkylene unit is bonded via a ether bond; and B represents a substituted or unsubstituted alkylene group, a substituted or unsubstituted fluoroalkylene group or an oxygen atom.

3. The polymer gel electrolyte according to claim 1 or 2,
wherein the polymer gel electrolyte comprises a solvent selected from the group consisting of cyclic carbonates, chain carbonates, aliphatic carbonic acid esters, γ-lactones, cyclic ethers, chain ethers, and fluorine derivatives thereof as the aprotic solvent.

4. The polymer gel electrolyte according to any one of claims 1 to 3,
wherein the polymer gel electrolyte comprises a material selected from the group consisting of LiPF₆, LiBF₄, LiAsF₆ and LiSbF₆ as the supporting salt.

5. A polymer secondary battery comprising:
a cathode;
an anode; and
the polymer gel electrolyte according to any one of claims 1 to 4.

6. The polymer secondary battery according to claim 5,
wherein the cathode comprises a lithium containing composite oxide as a cathode active material.

7. The polymer secondary battery according to claim 5 or 6,
wherein the anode comprises a material selected from the group consisting of material capable of absorbing and releasing lithium as an anode active material.

8. The polymer secondary battery according to claim 7,
wherein the material capable of absorbing and releasing lithium is a carbon material.
